# EUROPEAN PATENT SPECIFICATION

(11) **EP 1 330 154 B1**
(45) Date of publication and mention of the grant of the patent: **23.01.2008**
(21) Application number: 01978220.0
(22) Date of filing: 16.10.2001
(51) Int. Cl.: A01K 1/01, A01C 3/00, C05F 3/00

(54) **A METHOD OF REDUCING EMISSION OF AMMONIA FROM ANIMAL MANURE, A PLANT FOR PERFORMING THE METHOD AND A USE OF SUCH PLANT**
VERFAHREN ZUR MINDERUNG VON AMMONIAK AUS TIERDUNG, EINE ANLAGE ZUR AUSÜBUND DES VERFAHRENS UND EINE ANWENDUNG DIESER ANLAGE
PROCEDE DE REDUCTION D'EMISSIONS D'AMMONIAC PROVENANT DU FUMIER ANIMAL, INSTALLATION CON UE POUR REALISER LE PROCEDE ET UTILISATION D'UNE TELLE INSTALLATION

(30) Priority: 16.10.2000 DK 200001541
(43) Date of publication of application: 30.07.2003
(73) Proprietor: Infarm A/S, 9200 Aalborg SV (DK)
(72) Inventor: JENSEN, Jens, Ostergaard, DK-9310 Vodskov (DK)
(74) Representative: Plougmann & Vingtoft A/S
(86) International application number: PCT/DK2001/000685
(87) International publication number: WO 2002/032218

(56) References cited:
- EP-A- 0 498 084
- EP-A- 0 850 561
- WO-A-00/15027
- WO-A-95/12971
- DE-A- 19 812 522
- US-A- 5 890 454
- DATABASE WPI Section PQ, Week 199923 Derwent Publications Ltd., London, GB; Class P14, AN 1999-264357 XP002902249 & CN 1 205 836 A (LI M), 27 January 1999 (1999-01-27)

## Description

The present invention relates to a method of reducing emission of ammonia from animal manure, said manure containing ions of ammonium NH₄⁺ and having a pH value above 7, and said manure being added an acid compound having a pH value below 7, and where the acid compound is added to the manure after the manure has been led from a manure gutter to a collection vessel. The invention also relates to a plant for performing the method and relates to a use of such a plant.

EP 0 850 561 describes a system for reducing the emission of ammonia dust and odeur at the same time. A storage reservoir is provided with acidification, means for adding an acid such as sulphuric acid to the liquid fraction of the manure in the storage reservoir. Thereby the manure may be acidified to a pH of less than 6 and fed back to the manure collection channels. The fresh manure entering the collection channels then enters an acidic environment, thus limiting the discharge of ammonia, NH₃. Also described is an air removal channel in order to mix the animal-shed air with the acidified liquid manure in order to purify the air being ventilated form the animal-shed.

EP 0 498 084 also describes the possibility of acidifying the liquid fraction of manure, however, in order for the pH of the manure being so that the manure may used to clean the livestock house. Before the liquid fraction of the manure possibly is acidified and filtered, the combined liquid fraction and solid fraction is dried by means of the ventilating air in the livestock house. Thereby the solid fraction is 30% or more. During the aeration a large amount of fluid is extracted form the urine and the faeces so that the water content of the faeces fraction and the volume of the urine are reduced.

WO 95/12971 furthermore describes a stable provided with means for adding of an acid to the manure and afterwards using the acidified manure to flush gutters in the stable. One of the purposes of the stable described in this publication is to reduce the emission of ammonia. The manure having a pH value above 7.0 is added an acid so that the pH value is decreased to a value of 6.0 or lower. The ammonia-ions in the manure are bound to the negatively charged ions of the acid, and thereby the amount of free ammonia emitted from the gutters is limited due to the decrease of non-bounded ammonia-ions.

US 3,918,404 describes a system where acid is added to a Holding & Mixing tank as well as to a pipe system leading to feedlots pens. The content of the Holding & Mixing tank is pumped to a screen dividing the slurry in a liquid phase and a fiber phase. The liquid phase is passed on to a mixer, and principally the liquid from this mixer is led to an irrigation process or to an irrigation storage facility. A small amount of liquid is led to a pipe system 36, is acidified from an acid pump 38 and is led back to the feedlots pens along a pipe system 41. However, still much liquid has to be led to the irrigation process or to the irrigation storage facility. The small amount of liquid is acidified by means of adding acid to the pipe system leading the slurry from the mixer to the feedlots pens. Excessive foaming may occur when the flow of acid joins the flow of manure in the pipe system, both of said flows turbulently agitating the acid and the manure inside the pipe system.

However, some disadvantages occur when using the methods and systems described in the above-mentioned publications. Firstly, flushing of the gutters with the acidified manure may cause aerosols of ammonia to occur. These aerosols being small droplets of ammonia may be more irritating to the animals and persons situated in the stable than the mere ammonia-vapour normally occurring. Secondly, reducing the evaporation of ammonia in an animal-shed by adding an acid to the liquid fraction of the manure and then feeding the acidified manure back to the collection channels results in that the amount of sulphuric acid being added will have to be constantly increased in order to maintain the same and low level of evaporation of ammonia. If the chemical composition of the manure is the same whenever manure is led from the gutters to a manure reservoir, then the same amount of acid have to be added continuously, thus resulting in a high consumption of acid.

Thirdly, there is a great risk of hydrogen sulphide, H₂S, being formed if as example sulphuric acid is being used as the acid. To the person skilled in the art, sulphuric acid will be a highly recommended acid to add to the manure because sulphuric acid is easy to produce and is cheap to buy. However, hydrogen sulphide, H₂S, is a very bad smelling and a highly flammable compound, if ignited. Also, because of hydrogen sulphide being heavier than atmospheric air, if hydrogen sulphide is generated, there is a risk of the animals in the stable being suffocated.

It is an object of the present invention to remedy the disadvantages of the above-mentioned prior art and to provide a method and a plant for performing the method that are capable of reducing the emission of manure, not only in an efficient manner but also in an economical manner. It is also an object to provide a method and a plant that are capable of, at the same time, reducing the emission of ammonia and optimising conversion of plant accessible nitrogen in the manure.

This object is obtained by a method where the manure furthermore is being added oxygen after the manure has been led from the manure gutter, and where the acidified and oxidized manure having been added both the acid compound and the oxygen afterwards is being led back to the manure gutters.

By also adding oxygen to the manure, several advantages have shown to be present. Some of the advantages are not present if only oxygen is added to fresh manure, but is only present if the oxygen is added to acidified manure. One advantage is that conversion of organic substances to inorganic substances is enhanced. This, the person skilled in the art may have been able to deceive, however, not when the conversion takes place in an acid environment such as the acidified manure. In the present invention, due to the effect of reducing the emission of ammonium by acidifying the manure, the person skilled in the art would think that this will lead to an increase in the amount of organic ammonia, thus increasing the risk of pollutive effects of the manure if and when spread on agricultural fields, because of the non-accessibility of the organic nitrogen to plants. However, surprisingly it has been shown that this effect is not present. This is due to the adding of oxygen to the manure, the oxidation resulting in the formation of a certain amount of urea, which, although being an organic nitrogen-containing compound, is accessible to plants. Also, because of adding of oxygen to the manure, amino acids are transformed to urea. Contrary to this, if no oxidation is established, then the amount of organic and non-accessible nitrogen would be much greater.

Thus, actually there is a discrepancy between the adding of an acid compound leading to an increase in the amount of nitrogen in the treated manure, and the adding of oxygen leading to an increase in the amount of ammonia emitted from the manure. However, according to the method of the present invention, it is possible to combine the two compounds and achieve the advantage of a surprising synergetic effect.

Another advantage is that the risk of hydrogen sulphide, H₂S, being generated is eliminated or at least limited to a level below a level of nuisance due to the bad-smelling of the hydrogen sulphide and below a level of danger due to the risk of fire starting, if ignited. An even further advantage which has been surprisingly found during tests in a stable is that the amount of acid compound to be added may be constantly reduced in relation to the number of times that manure is led to the collecting vessel such as a collection tank or annular canals running through the stable, and in which tank or canals the manure may stay for a shorter or longer period of time, and acidified and oxidized manure is led back to the manure gutters.

However, theoretically there is always a risk of hydrogen sulphide to develop if sulphuric acid is used as the acid compound and if not the adding of oxygen to the manure is sufficient. The chemical process for developing hydrogen sulphide is

SO₄²⁻ + Desulfovibrio(bacteria) → H₂S

Therefore, the plant according to the invention may comprise an alarm for alerting if the amount of hydrogen sulphide is to high in comparison to a satisfactory low level. The alarm may be combined with other alarms related to monitoring the stable and the equipment in the stable.

By a preferred method, the acid compound is added in the collection vessel after the manure has been led to the collection vessel and before the acidified manure is led back to the manure gutters, and the oxygen is added to the manure after the manure has been led from the collection vessel and before the acidified and oxidized manure is led back to the manure gutters.

By adding the acid compound in the collecting vessel, the acid may be added under conditions where the manure is settled and measuring of the pH value can be made accurately. Contrary to this, adding of the oxygen is best performed when the acidified manure flows through distribution means so that the oxygen is effectively mixed with the acidified manure. Adding of the oxygen may take place either by means of an ejector provided in the distribution means or by means of a compressor blowing air into the distribution means.

Preferably, the acidified and oxidized manure being led to the manure gutters has a pH value of between 3.0 and 7.0, preferably between 4.0 and 6.0, more preferably a pH value of 5.5, and has a content of oxygen of between 0.4 mg/l and 5.0 mg/l, preferably between 0.5 mg/l and 2.0 mg/l, more preferably 1.0 mg/l.

Within these values it is assured that the advantages and the desired technical effects can be obtained. The advantages are more pronounced and the technical effects are greater when using the preferred values or the more preferred values.

By a preferred method, manure from the manure gutters is being mixed with manure that has been initially collected in the collection vessel and subsequently has been acidified and oxidized, and the mixture of the non-acidified and the non-oxidized manure together with acidified and the oxidized manure is being recycled in such a way that a number of times the mixture is being led from the manure gutters to the collection vessel for adding of the acid compound and adding of the oxygen and subsequently is being led from the collecting vessel to the manure gutters, and an amount of acid compound added before the mixture is being led from the collecting vessel to the manure gutters may be decreased relative to the number of times that the mixture has been cycled by being led from the manure gutters to the collection vessel.

Preferably, the manure is led from the manure gutters to the collection vessel and subsequently acidified and oxidized and finally led back to the manure gutters more than once. This results in that after a first cycle of manure, then the manure taken from the manure gutters will be a mixture of fresh manure and the cycled manure being acidified and oxidized. However, surprisingly it has been found that the amount of acid that has to be added in order to keep the manure in the collecting vessel at a certain low pH value is decreasing in relation to the number of times that the manure is cycled between the manure gutters and the collection vessel although fresh manure is mixed into the cycled manure every time the manure is led to the manure gutters.

The reason for this is not at present precisely known, but one theory is that aerobic micro-organisms that are used for converting organic substances to in-organic substances develop one or more acid compounds during their respiration and conversion. These acid compounds developed by the micro-organisms also lowers the pH value and is also used for bonding the ammonia-ions, thus reducing the emission of ammonia. The acid compounds developed by the micro-organisms is most likely lactic acid, CH₃CH(OH)COOH, acetic acid, CH₃COOH, and formic acid, HCOOH. The effect of the acid compound being added in the collection vessel decreasing because of aerobic micro-organisms developing supplementary acid compounds can probably only be obtained when the manure is oxidized, because the oxidation increases the activity of the aerobic micro-organisms.

A plant according to the invention comprises a collection vessel for collecting animal manure being led from manure gutters in a stable, and said plant furthermore comprises an acid supply tube for adding an acid compound to the manure in the collection vessel, said acid supply tube loading from a reservoir for the acid compound to the bottom of the collection vessel, and oxygen supply means for adding oxygen to the manure in the collection vessel, and said plant furthermore comprises distribution means for distributing the acidified and oxidized manure back to the manure gutters in the stable and which distribution means is situated between the collecting vessel and a number of outlets of the distributing means.

A plant being fitted with means both for adding an acid compound and for adding of oxygen involves synergetic effects to the technical effect of the manure distributed by the plant, effects which have not yet been possible to envisage. The synergetic effects are described more in detail in relation to the above brief description of the method according to the invention. The theoretical basis of the invention lies in simple chemical relations. There will always be equilibrium between dissolved ammonium, NH₄⁺, and the content of ammonia, NH₃, in the air. This equilibrium will be shifted under alteration of the pH value. During tests experiments are made lowering the pH value. The results show that at a pH value of 5,0 emission of ammonia excised. At a pH value of 5,5 only a minimal emissionof ammonia occurs. During the tests it was envisaged that a part of the emission of ammonia occurs just after the manure from the animals lands on the floor of the pen. The chemical process is the following:

CO (NH₂)₂ + H₂O + urease → (NH₄)₂CO₃ → 2 NH₃ + CO₂ + H₂O

The micro organisms constituted by bacteria which produce urease are sensitive to pH values and are very little active at pH values below 5.5. Thus, the chemical process may be limited by lowering the pH value on the floor to pH values below 5.5.

A preferred embodiment of the plant is provided with acid supply means for adding the acid compound to the collection vessel, and preferably to the bottom of the collecting vessel, and the plant is provided with acid supply means comprising a valve being installed between a reservoir for the acid compound and the collecting vessel for the manure, and where adding of the acid compound from the reservoir through the valve to the collecting vessel is regulated by a pH sensor situated in the collecting vessel.

Using a pH sensor to regulate the adding of the acid compound from an acid supply makes it possible to fully automate the adding of the acid compound, without the need to control or monitor the adding of the acid compound. There is only a need for controlling that the acid supply means such as a large vessel containing the acid compound is not running dry.

A preferred embodiment of the distribution means of the plant comprises a pump installed in the collecting vessel, preferably an emerged pump being installed at the bottom of the collecting vessel, and where the distribution means comprises outlets being submerged below a surface of liquid manure being gathered and standing a certain depth in the manure gutters.

Using a submerged pump for pumping the acidified manure from the as example a collecting tank to the manure gutters and having outlets of the distribution means placed below a surface of a liquid part of the manure in the manure gutters ensures that no aerosols are being formed and spread in the stable when the manure is distributed to the manure gutters, thus improving the environment in the stable.

A further preferred embodiment of the distribution means of the plant comprises a number of transfer pipes constituting passages from a main pipe of the distribution means to the outlets of the distribution means, and where the transfer pipes extend from the main pipe upwards along a curve to an upper level and extend from the upper level downwards along a curve to the outlets, and where the upper level of all the number of transfer pipes lie in the one and same horizontal plane so that the liquid pressure of the acidified and oxidized manure in the outlets is the one and same.

Having transfer pipes from a main pipe and letting the pipes extend along an upwardly orientated curve and downwards to the outlets, and furthermore maintaining an upper level of the number of transfer pipes at the one and same horizontal level makes it simple and easy to have the same amount of acidified and oxidized manure being led to different manure gutters. This can be done irrespective of where the acidified and oxidized manure is being let into the main pipe and, thus there is no need to regulate the transfer of acidified and oxidized manure from the main pipe to the outlets by means of valves, different dimensions of the transfer pipes or other means for ensuring equal amount of acidified and oxidized manure being led to the different manure gutters.

A plant for reducing emission of ammonia from manuring areas in the stable comprises acid supply means for adding an acid compound to water, and said plant furthermore comprising distribution means for distributing the acidified water to a manuring area of the stable and which distribution means is situated between an inlet of water and a number of outlets of the distributing means. In a preferred embodiment of this plant the water pipe is running above the floor and above the pens at a certain height. This has the advantageous effect, that particles of dust in the air above the pens will be caught by the acidified water flushing the pens. Catching of the dust-particles by the water takes place both "mechanically" by the droplets of acidified water colliding with dust-particles, but also takes place "electrically" by the negatively charged ions in the acidified water attracting the often positively charged dust-particles.

The invention will now be described in more detail with reference to the accompanying drawings, where
fig. 1 is a schematic view of a plant for reducing emission of ammonia from manure butters and from a manuring area on a floor for animals in a stable,
fig. 2 is a photograph showing the plant installed in a stable for pigs, the plant comprising both means for reducing emission of ammonia
fig. 3 is a photograph showing a detail of the plant, the detail being a part of the plant for distributing treated manure to the manure gutters, and
fig. 4 is a photograph showing a detail of the plant, the detail being a part of the plant for distributing treated water to the manuring areas of the stable floor

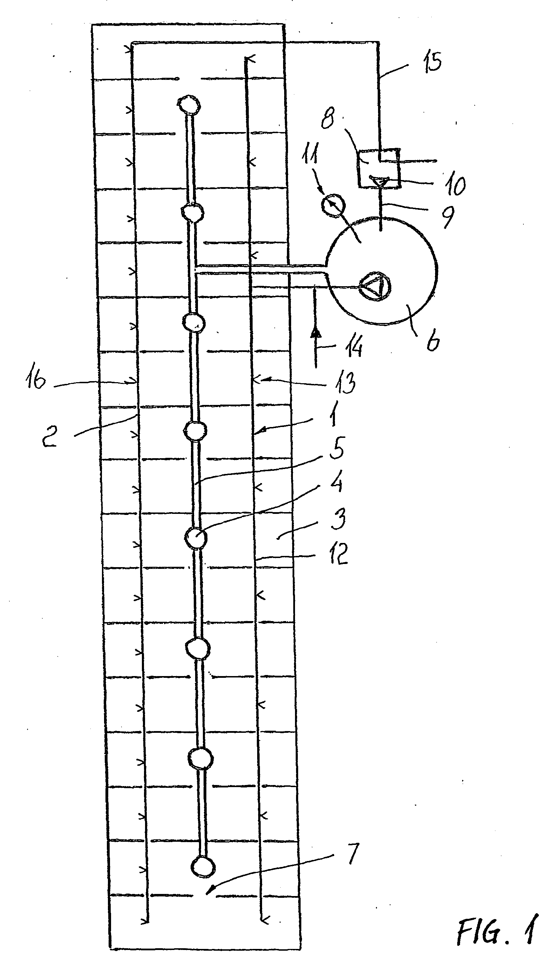

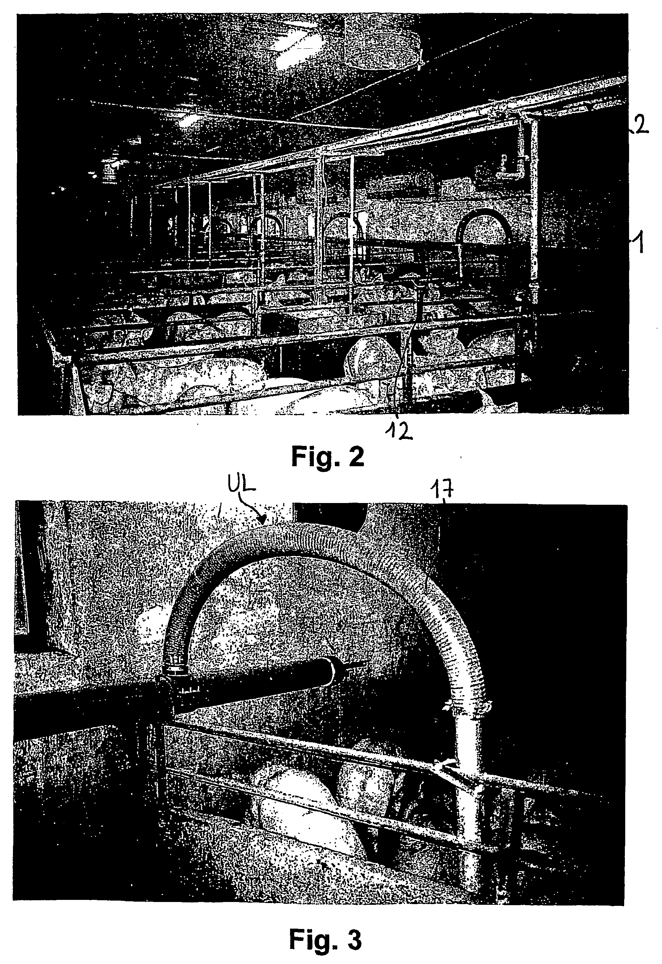

Fig. 1 shows a possible plant for performing the method according to the invention. The plant is provided with a first part 1 with means for reducing emission of ammonia from manure gutters and a second part 2 with means for reducing emission of ammonia from manuring areas. The plant is installed in a stable. The stable comprises pens 3 for husbandry animals. The pens 3 are provided with a floor (see fig. 2), and preferably the floor is elevated in relation to manure gutters being provided under the floor and the floor being provided with grits (see fig. 2) through which manure from the animals may flow into the manure gutters under the floor.

The manure gutters are provided with drains 4 for leading the manure from the gutters through drainpipes 5 to a common collection vessel 6, the vessel being a tank in the embodiment shown. Alternatively, the collecting vessel could be a system of canals running through the stable and in which canals the manure stays for a period of time before being led to an outlet of the canals. In the embodiment of the stable shown, only each second gutter is provided with an outlet 4. Between gutters having a drain 4 and gutters not having a drain a passage 7 is established between the gutters so that gutters not having a drain may communicate with gutters having a drain and thereby the manure from gutters not having a drain may be drained also. The fresh manure drained from the gutters is led to the common collection tank 6.

The first part 1 of the plant is provided with means for adding an acid compound to the manure and is also provided with means for adding of oxygen to the manure. When collected in the collection tank 6, the fresh manure is being added an acid compound. A reservoir 8 for the acid compound is placed nearby the collection tank 6. A tube 9 leads from the reservoir 8 for the acid compound to the collection tank 6 and preferably to the bottom of the collection tank. A valve 10, preferably a motor-regulated valve, is installed between the reservoir 8 and the collection tank 6 just before or along the tube 9 leading to the collection tank. A pH sensor 11 is installed in the collection tank 6 at a proper level so that the pH sensor is capable of sensing the pH value of the manure in the collection tank. The manure when initially being led to the collection tank has a pH value above 7.0 and it is an object to lower the pH value to a value below 7.0. This is accomplished by adding the acid compound to the manure.

Adding of the acid compound is regulated by the pH sensor 11 and by the valve 10. The pH sensor 11 is programmed to a certain pH value of between 3.0 and 7.0, preferably between 4.0 and 6.0, more preferably a pH value of 5.5. As long as the pH value is above the pH value that the pH sensor 11 is programmed for, the valve 10 is opened in order to add the acid compound from the reservoir 8 through the tube 9 to the collection tank 6. When the pH value reaches the pH value that the pH sensor 11 is programmed for, then the valve 10 is closed. In the collection tank 6 the fresh manure has now been acidified. Subsequently the manure is to be oxidized.

Distribution means are provided for distributing the acidified manure from the collection tank 6 to the manure gutters. The distribution means comprises a main pipe 12 leading from the collection tank and along the pens. Through outlets 13, the manure from the collection tank 6 is led from the main pipe 12 to the manure gutters. The main pipe 12 is provided with the means 14 for adding of oxygen to the acidified manure from the collection tank 6. The means 14 for adding of oxygen may be an ejector provided in the main pipe 12 for sucking of oxygen or atmospheric air into the main pipe. The means 14 for adding of oxygen may also be a compressor for blowing of oxygen or atmospheric air into the main pipe.

As mentioned, the plant also comprises means 2 for reducing emission of manure from manuring areas on the floor at which the husbandry animals stand and lie. These means consist of a water pipe 15 leading past the reservoir 8 for the acid compound and further on to manuring areas in the stable. The water is being led past the reservoir 8 in order to have an amount of the acid compound mixed with the water. Thereby, the water is acidified and is being led to outlets 16 established in each pen 3. The outlets 16 are established above the floors in the pens so that a certain area of the floors may be flushed with the acidified water.

The animals standing and resting in the pen may not have a certain manuring area in the pen. However, the parts of the floor in the pen which is being flushed with the acidified water will often for many species of husbandry animals be chosen as the manuring area, probably because the area is wet. Thus, if the animals do not have a manuring area of their own choice, then the area being flushed may become the preferred area to manure.

Fig. 2 is a photograph of a stable installed with both the first part and the second part of the plant. The first part of the plant comprises the distribution means consisting of the main pipe 12 running along one of the walls of the stable, the outlets (not shown) and transfer pipes 17 (see also fig. 3) established between the main pipe 12 and the outlets 13.

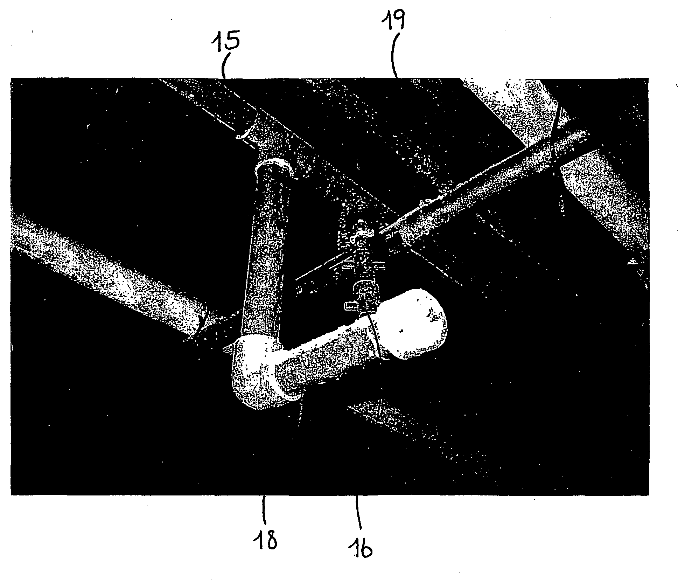

The second part of the plant comprises the water pipe 15 running above the pens of the stable and outlets 16 (see also fig. 4). The outlets 16 are provided along side pipes extending from the main water pipe 15 and the reason for the outlets being provided above the pens is firstly, that a relatively large area of the floors in each pen may be flushed by the acidified water from the outlets. Secondly, flushing from a position above the pens has the effect that particles of dust in the air above the pens will be caught by the water flushing the pens. Catching of the dust-particles by the water takes place both "mechanically" by the droplets of acidified water colliding with dust-particles, but also takes place "electrically" by the negatively charged ions in the acidified water attracting the often positively charged dust-particles.

Fig. 3 is a photograph showing the main pipe 12 of the first part of the plant, and a transfer pipe 17 leading from the main pipe 12 to an outlet (not shown). The main pipe 12 leads from the collection tank 6 and along the different pens in the stable (see fig. 1). The transfer pipe 17 extends from an upper part of the main pipe 12 upwards along a curve to an upper level UL and further on downwards along a curve to the outlet (not shown). The outlet is positioned underneath the floor F in the pen, and is preferably positioned underneath a surface of liquid manure standing a certain height in the manure gutters under the floor. Thereby, when the acidified and oxidized manure is being led to the outlets, then there is no risk of flushing or any other actions, which may cause droplets of the manure developing.

The upper level UL of the transfer pipe is established at a certain horizontal level. All the transfer pipes (see fig. 2) to the different pens have upper levels established at the one and same horizontal level (see fig. 2). This feature in combination with the feature that the transfer pipes lead from an upper part of the main pipe has the effect, that the amount of acidified and oxidized manure being led from the main pipe via the transfer pipes and outlets to the manure gutters will be the same irrespective of whether the manure gutter is placed near or far from where the main pipe leads from the collection tank.

Fig. 4 shows an outlet from the water pipe 15 of the second part of the plant. The outlet 16 is established in a side branch 18 of the main water pipe, and a sprinkler 19 is provided as the outlet. The sprinkler 19 is designed to flush a selected section of the floor in a pen. The main pipe 15 and the sprinkler 19 are provided at a certain height over the pens, the height being at least the height of a person. Thus, the dust-particles caught by the acidified water flushing the pens will be caught in a height above the level of persons and pigs being present in the stable.

Results from test made of the plant according to the invention will now be presented and discussed with reference to the tables and discussions below.

### Measurements and analyses:

Initial tests are made where in a laboratory atmospheric air is blown into manure contained in a large measuring glass of approximately 2 I. Blowing takes place momentary with 2 minutes of blowing during a quarter of an hour. The pH value of the manure is constantly controlled and regulated to a pH value of 5.0. Subsequent analyses determine that the process as tested is possible, and that 91% of the nitrogen in the manure after treatment is in-organic, and thus plant accessible, compared to only 65% of the nitrogen in the non-treated manure being in-organic.

Also full scale tests are made. The tests are made in a pen with space for 25 pigs. The pen is pen with concrete grates with shielding made of concrete. The manure is kept in a manure gutter underneath the grates. The manure gutter has a depth of 0.5 m and has a manure capacity of 3.25 m³. In the manure gutter there is a manure capacity for 3 weeks. As reference a neighbouring pen is used med dimensions and layout corresponding to the test pen. Also the flooring is the same. The pigs in the reference pen are of the same size as in the test pen. Part of the manure is drained from the gutter twice an hour in a period of time of 1 min. The pump is a submerged pump "Flygt® 3000". Thereby manure is pumped from the bottom of the gutter through a drainage to the collecting tank. At the same time sulphuric acid is added to the collecting tank. The amount of sulphuric acid, H₂SO₄ (96%), added is 0.675 percentage of weight compared to the amount of manure. The manure added the sulphuric acid is flushed through a nozzle to the manuring area of the pen. Thus, two advantages are accomplished in the one and same process.
1. The urease producing bacteria on the manuring area are impeded. Thereby, the not wanted process: CO(NH₂)₂ + H₂O + urease → (NH₄)₂CO₃ → 2NH₃ + CO₂ + H₂O
2. The manure in the manure gutters is kept at a pH value of about 5.0.

During the test period emission of ammonia is constantly measured over the test pen by means of a measurement apparatus Dräger Accura. As an average of all measurements a content of ammonia (NH₃) above the flooring in the test pen of 1 ppm corresponding to 0.71 mg NH₃ per m³ of air. In the reference pen there is a corresponding average of 13 ppm corresponding to 9.23 mg NH₃ per m³ of air. Thus, the treatment resulted in the emission of ammonia being 13 times as small.

After the manure gutters in the test pen and the reference pen, respectively, are filled, representative samples are taken and analysed. In accordance with the above-mentioned tests of the air, there is a much higher content of nitrogen in the manure from the treated pen in relation to the non-treated pen, namely 6400 mg(N)/l compared to 5100 mg(N)/l.

During the tests the content of hydrogen sulphide, H₂S, is measured with a Dräger Accura measurement apparatus. During none of the measurements is hydrogen sulphide present.

The amount of oxygen, O₂, in the manure is constantly measured in the test pen as well as in the reference pen. The measurements are made with an oxygen sensor YSI 55. The average-of daily measurements over a period of three weeks is that the content of oxygen in the test pen is 0.45 mg oxygen, O₂, per litre of manure while the content of oxygen in the reference pen is 0.09 mg oxygen, O₂, per litre of manure. Thus, there is a remarkable difference in the content of oxygen in the two pens. With reference to studies among the technical literature it is assumed that the content of oxygen, O₂, shall be about 1.00 mg oxygen, O₂, per litre of manure.

Test results of tests in pen:

| | Test pen | Difference | Reference pen |
|---|---|---|---|
| Measured content of ammonia NH₃ in the air | 1.2 ppm | > 8.0 ppm > | 9.2 ppm |
| Analysed content of total amount of nitrogen (N) | | | |
| in dry matter (100 g) | 12.13 g | < 2.11 g (21.06 %) < | 10.02 g |
| in manure (1000 g) | 4970 mg | < 709 mg (16.9 %) < | 4198 mg |
| Analysed content of ammonium (NH₄⁺) | | | |
| in dry matter (100 g) | 9.17 g | < 2.25 g (32.5 %) < | 6.92 g |
| in manure (1000 g) | 3709 mg | < 810 mg (27.9 %) < | 2899 mg |
| Analysed content of urea | | | |
| in dry substance (100 g) | 5.69 g | < 0.56 g (10.9 %) < | 5.13 g |
| in manure (1000 g) | 1074 mg | < 71 mg (7.1 %) < | 1003 mg |
| Plant accessible | 4783 mg | < 881 mg (22.6 %) < | 3902 mg |
| nitrogen | | | |
| Total amount of dust | | | |
| Personally carried sensor | 1.5 mg/m³ | >3.6 mg/m³ (240 %) > | 5.1 mg/m³ |
| Stationary sensor | 1.2 mg/m³ | >1.5 mg/m³(125 %) > | 2.7 mg/m³ |
| Respiratory dust | | | |
| Personally carried sensor | 0.42 mg/m³ | >2.08 mg/m³ (495 %) > | 2.5 mg/m³ |
| Stationary sensor | 0.28 mg/m³ | >0.72 mg/m³ (257 %) > | 1.0 mg/m³ |
| Growth of 21 pigs, | | | |
| pr. pig pr. day | 964 g | < 157 g (19.5 %) < | 807 g |
| Size correction | 964 g | < 107 g (12.5 %) < | 857 g |
| Lung capacity, personnel | | | |
| < 15 ppm | | | 680 - 700 l/h |
| > 15 ppm | > 700 l/h | | 550 l/h |

Apart form tests made in a pen, further tests made in the fields have been conducted in the northern part of Denmark between 17 May 2001 and 24 July 2001. Two basins were established in the fields, each basin having a length of about 17 m, a width of about 3 m and a depth in average of 0.5 m. The one basin, the test basin, is a basin for conducting tests of manure treated according to the method of the invention, and the other basin, the reference basin, is a basin for conducting tests of manure not treated at all. The results show that the amount of ammonium in the test basin is much greater than in the reference basin meaning the nutritional value to plants is much greater in manure treated according to the invention than in manure not treated at all. Also the results show that the evaporation of ammonia from the test basin is much less than from the reference basin.

### Test results of test in the field:

| | Test basin g/100 g | Difference g/100 g | Reference basin g/100 g |
|---|---|---|---|
| Total amount of N | | | |
| (initially) | 9.70 | 2.72 | 6.98 |
| (after 68 days) | 12.88 | 8.47 | 4.41 |
| Amount of ammonium, NH₄⁺ | | | |
| (initially) | 8.68 | 4.15 | 4.53 |
| (after 68 days) | 11.07 | 10.22 | 0.85 |

Further tests showed that during the 68 days no evaporation of ammonia at all occurred in the test basin, white evaporation did occur in the reference basin. This significantly shows that the total amount of nitrogen in the manure treated by the method according to the invention is still present in the manure as in-organic bound nitrogen even after having been let into the fields, while the amount of nitrogen of the not treated manure is reduced when being let into the fields.

Further test results in the fields shows that an amount of 33 tons of not treated manure results in 65,67 hkg of grain per hectare in a field of wheat. However, an amount of only 20 tons of manure treated by means of the method of acidifying and oxidising according to the invention results in 73,33 hkg of grain per hectare in the same field of wheat.

## Claims

1. A method of reducing emission of ammonia from animal manure said manure containing ions of NH₄⁺ and having a pH value above 7, the method comprising leading manure from a manure gutter to a collection vessel (6) , and said manure being added an acid compound having a pH value below 7, and where the acid compound is added to the manure in the collection vessel (6) by a tube (9) leading from a reservoir (8) for the acid compound to the bottom of the collection vessel (6), after the manure has been led from the manure gutter to the collection vessel (6) and before the manure is led back to the manure gutters, and said manure furthermore being added oxygen after the manure has been led from the manure gutter, and where the acidified and oxidized manure having been added both the acid compound and the oxygen afterwards is being led back to the manure gutters, and wherein the acidified and oxidized manure being led to the manure gutter has a pH value of between 3.0 and 7.0.

2. A method according to claim 1, where the oxygen is added to the manure after the manure has been led from the collection vessel (6) and before the manure is led back to the a manure gutters.

3. A method according to any of claims 1, where the acidified and oxidized manure being led to the manure gutters has a pH value of between 4.0 and 6.0, more preferably a pH value of 5.5.

4. A method according to any of claim 1 or claim 2, where the acidified and oxidized manure being led to the manure gutters has a content of oxygen of between 0.4 mg/l and 5.0 mg/l, preferably between 0.5 mg/l and 2.0 mg/l, more preferably 1.0 mgll.

5. A method according to claim 1 or claim 3, where the acid compound is selected among sulphuric acid (H₂SO₄), hydrochloric acid (HCl), acetic acid (CH₃COOH), formic acid (HCOOH), sodium-hydrogen-sulphate (NaHSO₄), potassium-hydrogen-sulphate (KHSO₄) and sodium-hydrogen-sulphite (NaHSO₃).

6. A method according to claim 1, claim 3 or claim 5, where manure from the manure gutters is mixed with manure, that has been initially collected in the collection vessel (6) and subsequently has been acidified and oxidized, and where the mixture of the non-acidified and the non-oxidized manure together with acidified and the oxidized manure is recycled in such a way that a number of times the mixture is being led from the manure gutters to the collection vessel (6) for adding of the acid compound and adding of the oxygen and subsequently is being led from the collecting vessel (6) to the manure gutters.

7. A method according to claim 6, where an amount of acid compound added before the mixture is being led from the collecting vessel to the manure gutters is decreasing relative to the number of times that the mixture has been led from the manure gutters to the collection vessel (6).

8. A method according to any of the preceding claims, said manure containing ions of NH₄⁺ and having a pH value above 7, and where water of a pH value of about 7 is added an acid compound having a pH value below 7, and where the acidified water is led to a manuring area of an animal stable.

9. A plant for reducing emission of ammonia from animal manure, said plant comprising a collection vessel (6) for collecting animal manure being led from manure gutters in a stable, and said plant furthermore comprising an acid supply tube (9) for adding an acid compound to the manure in the collection vessel (6), said acid supply tube (9) leading from a reservoir (8) for the acid compound to the bottom of the collection vessel (6), and oxygen supply means (14) for adding oxygen to the manure in the collection vessel (6), and said plant furthermore comprising distribution means (15) for distributing the acidified and oxidized manure back to the manure gutters in the stable and which distribution means (15) is situated between the collecting vessel (6) and a number of outlets (13) of the distributing means (15).

10. A plant according to claim 10, where the oxygen supply means (14) is provided for adding the oxygen to the distribution means situated after the collecting vessel (6).

11. A plant according to claim 1, where the acid supply tube (99 comprises a valve (10) being installed between the reservoir 88) for the acid compound and the collecting vessel (6) for the manure, and where adding of the acid compound from the reservoir (8) through the valve (10) to the collecting vessel (6) is regulated by a pH sensor (11) situated in the collecting vessel (6).

12. A plant according to claim 10, where the oxygen supply means (14) comprises an ejector being installed in the distribution means between the collecting vessel (6) for the manure and the number of outlets (13) for the distribution means, and where adding of the oxygen through the ejector to the distribution means is established when acidified manure flows through the distribution means.

13. A plant according to claim 10, where the oxygen supply means (14) comprises a compressor being provided in connection with the distribution means between the collecting vessel (6) for the manure and the number of outlets (13) for the distribution means, and where adding of the oxygen by the compressor to the distribution means is established when acidified manure flows through the distribution means.

14. A plant according to any of claims 9-13, where the distribution means comprises a pump installed in the collecting vessel, preferably an emerged pump being installed at the bottom of the collecting vessel.

15. A plant according to any of claims 9-14, where the distribution means comprises outlets (13) being submerged below a surface of liquid manure being gathered and standing a certain depth in the manure gutters.

16. A plant according to any of claims 9-15, where the distribution means comprises a number of transfer pipes (17) constituting passages from a main pipe (12) of the distribution means to the outlets (13) of the distribution means, and where the transfer pipes (17) extend from the main pipe (12) upwards along a curve to an upper level (UL) and extend from the upper level (UL) downwards along a curve to the outlets (13).

17. A plant according to claim 16, where the transfer pipes (17) lead from an upper part of a circumference of the main pipe, the main pipe (12) extending in a substantially horizontal plane, and the transfer pipes (17) extending in a substantially vertical plane.

18. A plant according to claim 16 or claim 17, where the upper level (UL) of all the number of transfer pipes (17) lies in the one and same horizontal plane so that the liquid pressure of the acidified and oxidized manure in the outlets (13) is the one and same.

## Patentansprüche

1. Verfahren zur Reduktion der Emission von Ammoniak aus Tiergülle, der NH₄⁺-Ione enthält und einen pH-Wert über 7 hat, wobei das Verfahren Leiten der Gülle aus einer Güllerinne zu einem Aufsammelbehälter (6) umfasst, und der Gülle eine Säureverbindung mit einem pH-Wert unter 7 zugegeben wird, und wobei die Säureverbindung der Gülle im Aufsammelbehälter (6) durch eine Röhre (9) zugegeben wird, die von einem Reservoir (8) für die Säureverbindung zum Boden des Aufsammelbehälters (6) führt, nachdem die Gülle aus der Güllerinne zum Aufsammelbehälter (6) geleitet worden ist, und bevor die Gülle zu den Güllerinnen zurückgeleitet wird, und wobei der Gülle weiterhin Sauerstoff zugegeben wird, nachdem die Gülle von der Güllerinne geleitet worden ist, und wo die angesäuerte und oxidierte Gülle, dem sowohl die Säureverbindung als auch der Sauerstoff zugegeben worden ist, anschließend zu den Güllerinnen zurückgeführt wird, und worin die angesäuerte und oxidierte Gülle, der zur Güllerinne geleitet wird, einen pH-Wert zwischen 3,0 und 7,0 hat.

2. Verfahren nach Anspruch 1, wobei der Sauerstoff der Gülle zugegeben wird, nachdem die Gülle vom Aufsammelbehälter (6) geleitet worden ist, und bevor die Gülle zu den Güllerinnen zurückgeführt wird.

3. Verfahren nach irgendeinem der Ansprüche 1, wobei die angesäuerte und oxidierte Gülle, der zu den Güllerinnen geleitet wird, einen pH-Wert zwischen 4,0 und 6,0, noch bevorzugter einen pH-Wert von 5,5, hat.

4. Verfahren nach irgendeinem der Ansprüche 1 oder 2, wobei die angesäuerte und oxidierte Gülle, der zu den Güllerinnen geleitet wird, einen Sauerstoffgehalt von zwischen 0,4 mg/l und 5,0 mg/l, vorzugsweise zwischen 0,5 mg/l und 2,0 mg/l, noch bevorzugter von 1,0 mg/l, hat.

5. Verfahren nach Anspruch 1 oder 3, wobei die Säureverbindung unter Schwefelsäure (H₂SO₄), Salzsäure (HCl), Essigsäure (CH₃COOH), Ameisensäure (HCOOH), Natrium-Wasserstoff-Sulfat (NaHSO₄), Kalium-Wasserstoff-Sulfat (KHSO₄) und Natrium-Wasserstoff-Sulfit (NaHSO₃) ausgewählt ist.

6. Verfahren nach Anspruch 1, 3 oder 5, wobei Gülle aus den Güllerinnen mit Gülle, die zunächst im Aufsammelbehälter (6) gesammelt und nachfolgend angesäuert und oxidiert worden ist, gemischt wird, und wobei die Mischung des nicht-angesäuerten und der nicht-oxidierten Gülle zusammen mit angesäuerter und oxidierter Gülle so recycliert wird, dass die Mischung mehrmals aus den Güllerinnen zum Aufsammelbehälter (6) für die Zugabe der Säureverbindung und Zugabe des Sauerstoffs geleitet wird und nachfolgend aus dem Aufsammelbehälter (6) zu den Güllerinnen geleitet wird.

7. Verfahren nach Anspruch 6, wobei eine Menge von Säureverbindung, die, bevor die Mischung vom Aufsammelbehälter zu den Güllerinnen geleitet wird, zugegeben wird, im Verhältnis dazu sinkt, wie oft die Mischung aus den Güllerinnen zum Aufsammelbehälter (6) geleitet worden ist.

8. Verfahren nach irgendeinem der vorhergehenden Ansprüche, wobei die Gülle NH₄⁺~Ione enthält und einen pH-Wert über 7 hat, und wobei Wasser mit einem pH-Wert von ca. 7 einer Säureverbindung mit einem pH-Wert unter 7 zugegeben wird, und wobei das angesäuerte Wasser zu einem Güllebereich in einem Tierstall geleitet wird.

9. Anlage zum Reduzieren der Emission von Ammoniak aus Tiergülle, welche Anlage einen Aufsammelbehälter (6) zum Sammeln von Tiergülle, der aus Güllerinnen in einem Stall geleitet wird, umfasst, und welche Anlage weiterhin eine Säurezuführröhre (9) für die Zugabe einer Säureverbindung zur Gülle im Aufsammelbehälter (6) umfasst, welche Säurezuführröhre (9) von einem Reservoir (8) für die Säureverbindung zum Boden des Aufsammelbehälters (6) führt, und Sauerstoffzuführmittel (14) für die Zugabe von Sauerstoff zur Gülle im Aufsammelbehälter (6) umfasst, und welche Anlage weiterhin Verteilungsmittel (15) zum Zurückverteilen der angesäuerten und oxidierten Gülle zu den Güllerinnen im Stall umfasst, und welches Verteilungsmittel (15) zwischen dem Aufsammelbehälter (6) und einer Reihe von Ausgängen (13) des Verteilungsmittels (15) angebracht ist.

10. Anlage nach Anspruch 10, wobei das Sauerstoffzuführmittel (14) dafür bereitgestellt ist, den Sauerstoff dem Verteilungsmittel, das nach dem Aufsammelbehälter (6) angebracht ist, zuzuführen.

11. Anlage nach Anspruch 1, wobei die Säurezuführröhre (9) ein Ventil (10) umfasst, das zwischen dem Reservoir (8) für die Säureverbindung und dem Aufsammelbehälter (6) für die Gülle eingebaut ist, und wo Zugabe der Säureverbindung aus dem Reservoir (8) durch das Ventil (10) zum Aufsammelbehälter (6) durch einen pH-Sensor (11), der im Aufsammelbehälter (6) angebracht ist, reguliert wird.

12. Anlage nach Anspruch 10, wobei das Sauerstoffzuführmittel (14) einen Ejektor umfasst, der im Verteilungsmittel zwischen dem Aufsammelbehälter (6) für die Gülle und der Anzahl von Ausgängen (13) für das Verteilungsmittel eingebaut ist, und wobei die Zugabe des Sauerstoffes durch den Ejektor zum Verteilungsmittel etabliert wird, wenn angesäuerte Gülle durch das Verteilungsmittel fließt.

13. Anlage nach Anspruch 10, wobei das Sauerstoffzuführmittel (14) einen Kompressor umfasst, der in Verbindung mit dem Verteilungsmittel zwischen dem Aufsammelbehälter (6) für die Gülle und der Anzahl von Ausgängen (13) für das Verteilungsmittel bereitgestellt ist, und wobei die Zugabe des Sauerstoffes durch den Kompressor zum Verteilungsmittel etabliert wird, wenn angesäuerte Gülle durch das Verteilungsmittel fließt.

14. Anlage nach irgendeinem der Ansprüche 9-13, wobei das Verteilungsmittel eine Pumpe umfasst, die im Aufsammelbehälter eingebaut ist, vorzugsweise eine hervortretende Pumpe, die am Boden des Aufsammelbehälters eingebaut ist.

15. Anlage nach irgendeinem der Ansprüche 9-14, wobei das Verteilungsmittel Ausgänge (13) umfasst, die unter einer Oberfläche von flüssiger Gülle getaucht sind, und welche Ausgänge gesammelt sind und in einer gewissen Tiefe in den Güllerinnen stehen.

16. Anlage nach irgendeinem der Ansprüche 9-15, wobei das Verteilungsmittel eine Reihe von Überführungsrohren (17) umfasst, die Durchgänge von einem Hauptrohr (12) des Verteilungsmittels zu den Ausgängen (13) des Verteilungsmittels bilden, und wobei die Überführungsrohre (17) sich von dem Hauptrohr (12) nach oben entlang einer Biegung zu einem oberen Niveau (UL) erstrecken und sich von dem oberen Niveau (UL) nach unten entlang einer Biegung zu den Ausgängen (13) erstrecken.

17. Anlage nach Anspruch 16, wobei die Überführungsrohre (17) von einem oberen Teil eines Umfanges des Hauptrohrs führt, wobei das Hauptrohr (12) sich in einer im wesentlichen horizontalen Ebene erstreckt, und die Überführungsrohre (17) sich in einer im wesentlichen vertikalen Ebene erstrecken.

18. Anlage nach Anspruch 16 oder 17, wobei das obere Niveau (UL) von allen Überführungsrohren (17) in der einen und selben horizontalen Ebene liegt, damit der Flüssigkeitsdruck der angesäuerten und oxidierten Gülle in den Ausgängen (13) ein und derselbe ist.

## Revendications

1. Une méthode pour réduire les émissions d'ammoniac à partir de fumier animal, ledit fumier contenant des ions NH4⁺ et ayant un pH d'une valeur supérieure à 7, la méthode comprenant d'amener le fumier d'une rigole à fumier à une cuve collectrice (6), et un composé acide ayant un pH d'une valeur inférieure à 7 étant ajouté audit fumier, et où le composé acide est ajouté au fumier dans la cuve collectrice (6) à l'aide d'un tuyau (9) qui mène d'un réservoir (8) du composé acide jusqu'au fond de la cuve collectrice (6), après que le fumier ait été amené de la rigole à fumier à la cuve collectrice (6) et avant que le fumier ne soit ramené aux rigoles à fumier, et de l'oxygène étant en outre ajouté audit fumier après que le fumier ait été amené de la rigole à fumier, et où le fumier acidifié et oxydé auquel ont été ajoutés à la fois le composé acide et l'oxygène, est ensuite ramené aux rigoles à fumier, et dans laquelle le fumier acidifié et oxydé qui est ramené à la rigole à fumier a un pH d'une valeur entre 3,0 et 7,0.

2. Une méthode selon la revendication 1, où l'oxygène est ajouté au fumier après que celui-ci ait été amené de la cuve collectrice (6) et avant que le fumier ne soit ramené aux rigoles à fumier.

3. Une méthode selon l'une des revendications 1, où le fumier acidifié et oxydé qui est ramené aux rigoles à fumier a un pH d'une valeur entre 4,0 et 6,0, de préférence un pH d'une valeur de 5,5.

4. Une méthode selon l'une des revendications 1 ou 2, où le fumier acidifié et oxydé qui est amené aux rigoles à fumier a une teneur en oxygène entre 0,4 mg/l et 5,0 mg/l, de préférence entre 0,5 mg/l et 2,0 mg/l, plus préférentiellement de 1,0 mg/l.

5. Une méthode selon la revendication 1 ou la revendication 3, où le composé acide est choisi parmi l'acide sulfurique (H₂SO₄), l'acide chlorhydrique (HCl), l'acide acétique (CH₃COOH), l'acide formique (HCOOH), le bisulfate de sodium (NaHSO₄), le bisulfate de potassium (KHSO₄) et le bisulfite de sodium (NaHSO₃).

6. Une méthode selon la revendication 1, la revendication 3 ou la revendication 5, où le fumier issu des rigoles à fumier est mélangé avec du fumier initialement collecté dans la cuve collectrice (6) et par la suite acidifié et oxydé, et où le mélange du fumier non-acidifié et non-oxydé avec le fumier acidifié et oxydé est recyclé de telle sorte que le mélange soit plusieurs fois amené des rigoles à fumier à la cuve collectrice (6) pour l'ajout du composé acide et l'ajout de l'oxygène et par la suite amené de la cuve collectrice (6) aux rigoles à fumier.

7. Une méthode selon la revendication 6, où une quantité de composé acide qui est ajoutée avant que le mélange ne soit amené de la cuve collectrice aux rigoles à fumier est diminuée par rapport au nombre de fois que le mélange a été amené des rigoles à fumier à la cuve collectrice (6).

8. Une méthode selon l'une des revendications précédentes, ledit fumier contenant des ions NH₄⁺ et ayant un pH d'une valeur supérieure à 7, et où un composé acide ayant un pH de valeur inférieure à 7 est ajouté à de l'eau avec un pH d'une valeur d'environ 7, et où l'eau acidifiée est amenée dans une zone de fumure d'une étable à animaux.

9. Une installation pour réduire les émissions d'ammoniac à partir de fumier animal, ladite installation comprenant une cuve collectrice (6) pour collecter le fumier animal qui est amené des rigoles à fumier dans une étable, et ladite installation comprenant en outre un tuyau d'alimentation en acide (9) pour ajouter un composé acide au fumier dans la cuve collectrice (6), ledit tuyau d'alimentation en acide (9) menant d'un réservoir (8) du composé acide jusqu'au fond de la cuve collectrice (6), et un moyen d'alimentation en oxygène (14) pour ajouter de l'oxygène au fumier dans la cuve collectrice (6), et ladite installation comprenant en outre un moyen de distribution (15) pour redistribuer le fumier acidifié et oxydé vers les rigoles à fumier dans l'étable et lequel moyen de distribution (15) est situé entre la cuve collectrice (6) et plusieurs débouchés (13) du moyen de distribution (15).

10. Une installation selon la revendication 10, où le moyen d'alimentation en oxygène (14) est fourni pour ajouter l'oxygène au moyen de distribution situé après la cuve collectrice (6).

11. Une installation selon la revendication 1, où le tuyau d'alimentation en acide (9) comprend une vanne (10) qui est installée entre le réservoir (8) du composé acide et la cuve collectrice (6) du fumier, et où l'ajout du composé acide du réservoir (8) à travers la vanne (10) jusqu'à la cuve collectrice (6) est régulé par un capteur de pH (11) situé dans la cuve collectrice (6).

12. Une installation selon la revendication 10, où le moyen d'alimentation en oxygène (14) comprend un éjecteur qui est installé dans le moyen de distribution entre la cuve collectrice (6) du fumier et les plusieurs débouchés (13) du moyen de distribution, et où l'ajout de l'oxygène dans le moyen de distribution à travers l'éjecteur est établi lorsque du fumier acidifié s'écoule dans le moyen de distribution.

13. Une installation selon la revendication 10, où le moyen d'alimentation en oxygène (14) comprend un compresseur qui est fourni en connexion avec le moyen de distribution entre la cuve collectrice (6) du fumier et les plusieurs débouchés (13) du moyen de distribution, et où l'ajout de l'oxygène dans le moyen de distribution par le compresseur est établi lorsque du fumier acidifié s'écoule dans le moyen de distribution.

14. Une installation selon l'une des revendications 9 à 13, où le moyen de distribution comprend une pompe installée dans la cuve collectrice, de préférence une pompe émergée qui est installée au fond de la cuve collectrice.

15. Une installation selon l'une des revendications 9 à 14, où le moyen de distribution comprend des débouchés (13) qui sont submergés sous une surface de fumier liquide qui s'accumule et stagne sur une certaine profondeur dans les rigoles à fumier.

16. Une installation selon l'une des revendications 9 à 15, où le moyen de distribution comprend plusieurs conduites de transfert (17) qui constituent des passages d'une conduite principale (12) du moyen de distribution jusqu'aux débouchés (13) du moyen de distribution, et où les conduites de transfert (17) s'étendent de la conduite principale (12) vers le haut en suivant une courbe jusqu'à un niveau supérieur (UL) et s'étendent du niveau supérieur (UL) vers le bas en suivant une courbe jusqu'aux débouchés (13).

17. Une installation selon la revendication 16, où les conduites de transfert (17) sont issues d'une partie supérieure de la circonférence de la conduite principale, la conduite principale (12) s'étendant dans un plan essentiellement horizontal, et les conduites de transfert (17) s'étendant dans un plan essentiellement vertical.

18. Une installation selon la revendication 16 ou la revendication 17, où le niveau supérieur (UL) de toutes les plusieurs conduites de transfert (17) se trouve dans le même plan horizontal, de sorte que la pression liquide du fumier acidifié et oxydé au niveau des débouchés (13) soit le même.
